# FASCICULE DE BREVET EUROPEEN

(11) **EP 1 787 878 B1**
(45) Date de publication et mention de la délivrance du brevet: **04.11.2009**
(21) Numéro de dépôt: 05292430.5
(22) Date de dépôt: 16.11.2005
(51) Int. Cl.: B60T 7/06

(54) **Dispositif de montage notamment d'une tige de commande de frein sur la pédale de frein d'un véhicule automobile**
Befestigungsvorrichtung, insbesondere einer Betätigungsstange eines Bremskraftverstärkers an ein Bremspedal eines Kraftfahrzeuges
Mounting device in particular for a push rod of the power brake to the brake pedal of a motor vehicle

(43) Date de publication de la demande: 23.05.2007
(73) Titulaire: Lisi Automotive Rapid, 95650 Puiseux Pontoise (FR)
(72) Inventeur: Viennois, Fabien, 92800 Puteaux (FR)
(74) Mandataire: Berger, Helmut

(56) Documents cités:
- EP-A- 0 896 162
- EP-A- 1 431 596
- EP-A- 1 440 858
- FR-A- 2 101 999
- FR-A- 2 620 542
- US-A1- 2005 003 682

## Description

L'invention concerne un dispositif de montage notamment d'une tige de commande de frein sur la pédale de frein d'un véhicule automobile, du type comprenant une sphère à l'extrémité de la tige et une cage de rotule, solidarisable de la pédale de frein.

Les dispositifs de montage de ce type, qui sont connus, présentent l'inconvénient que le montage est difficile à mettre en oeuvre.

En effet, le document EP-A-0 896 162 concerne un dispositif de verrouillage d'une pédale de frein d'un véhicule automobile sur une tige de commande d'un frein assisté. La tige de commande est pourvue, à l'une de ses deux extrémités, d'une sphère destinée à être engagée dans une cage de rotule du mécanisme d'assistance de frein. Dans ce mécanisme connu, la sphère de la tige de commande est montée sur la cage de rotule par l'intermédiaire d'une agrafe à ouverture annulaire et avec des moyens de blocage de l'agrafe dans la cage de rotule lorsque la rotule est dans sa position verrouillée dans l'agrafe. En cas de démontage de la tige de commande, il faut donc pouvoir accéder d'abord au moyen de blocage de l'agrafe.

L'invention a pour but de proposer un dispositif d'assemblage qui pallie cet inconvénient.

Pour atteindre ce but, le dispositif de montage selon l'invention présente les caractéristiques énoncées dans la revendication 1. sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en perspective, partiellement en coupe, du dispositif de montage selon l'invention, à l'état assemblé ;
- la figure 2 est une vue similaire à la figure 1 du dispositif de montage avant l'engagement de la sphère de la tige de commande de frein ;
- la figure 3 est une vue en perspective de la cage de frein après l'insertion dans celle-ci de l'agrafe, mais non montée sur la pédale de frein ;
- la figure 4 est une vue en perspective illustrant le coussinet monté et centré sur l'agrafe ; et
- la figure 5 est une vue en perspective de l'agrafe et de la sphère à l'état verrouillé dans l'agrafe.

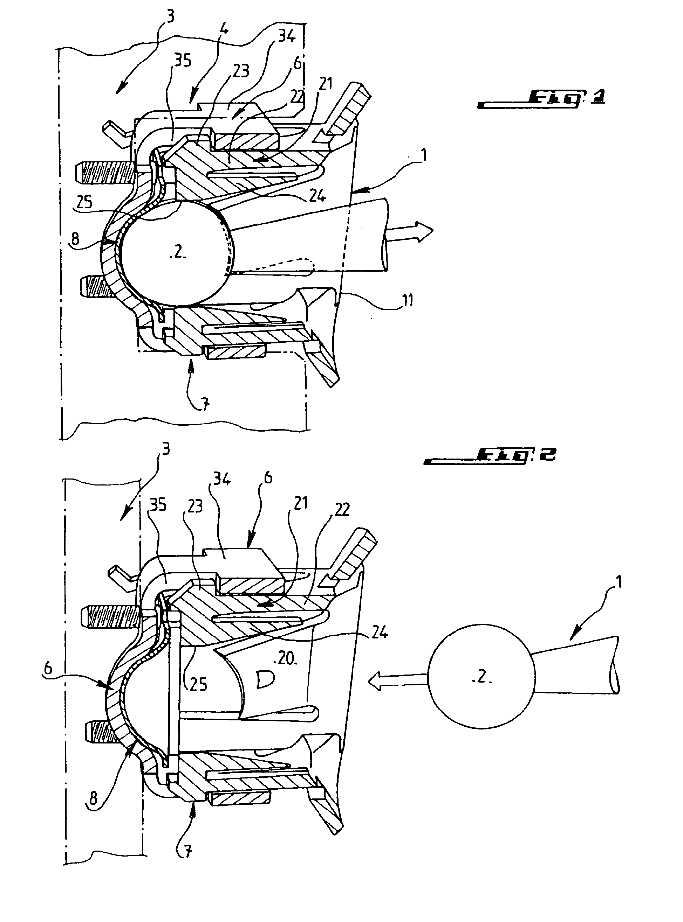

La figure 1 montre le dispositif de montage de la tige de commande de frein 1, dont l'extrémité est formée par une sphère ou rotule 2, à l'état monté sur la pédale de frein 3, au moyen du dispositif de montage noté 4.

Ce dispositif de montage comporte essentiellement une cage 6 fixée sur la pédale de frein 3 par tout moyen approprié connu, tel que soudage, rivetage, vissage ou analogue, une agrafe 7, avantageusement en matière plastique, montée et verrouillée dans la cage 6 et un coussinet 8 interposé entre la cage 6 et la sphère 2.

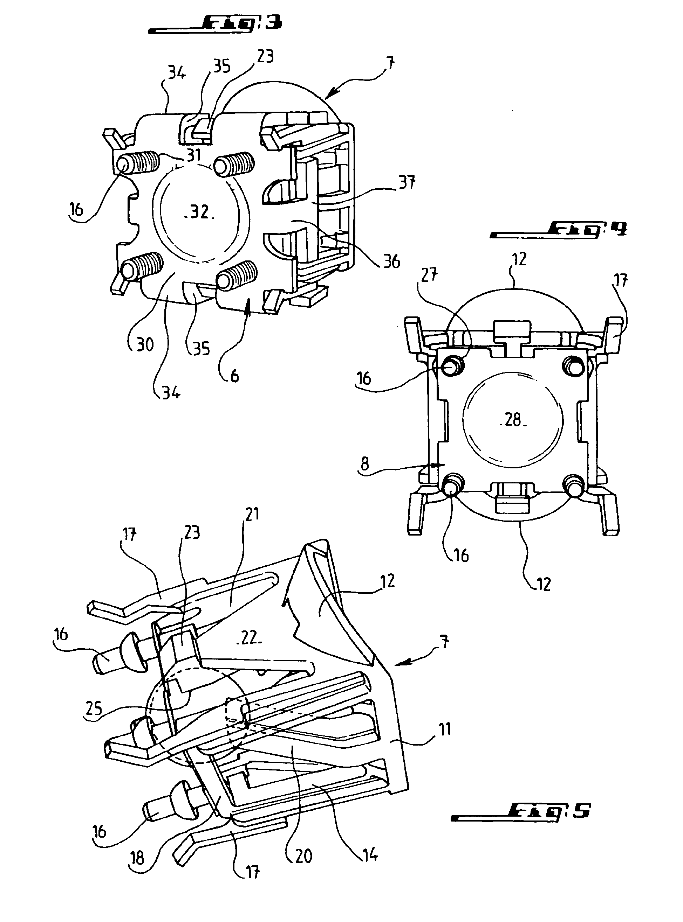

La figure 2 montre le dispositif de montage 4 avant la réception de la rotule 2 de la tige de frein 1, le coussinet 8 et l'agrafe 7 étant déjà montés sur la cage 6. Comme l'illustrent les figures 4 et 5, le coussinet et l'agrafe sont conçus pour être préalablement assemblés, avant l'assemblage sur la cage 6.

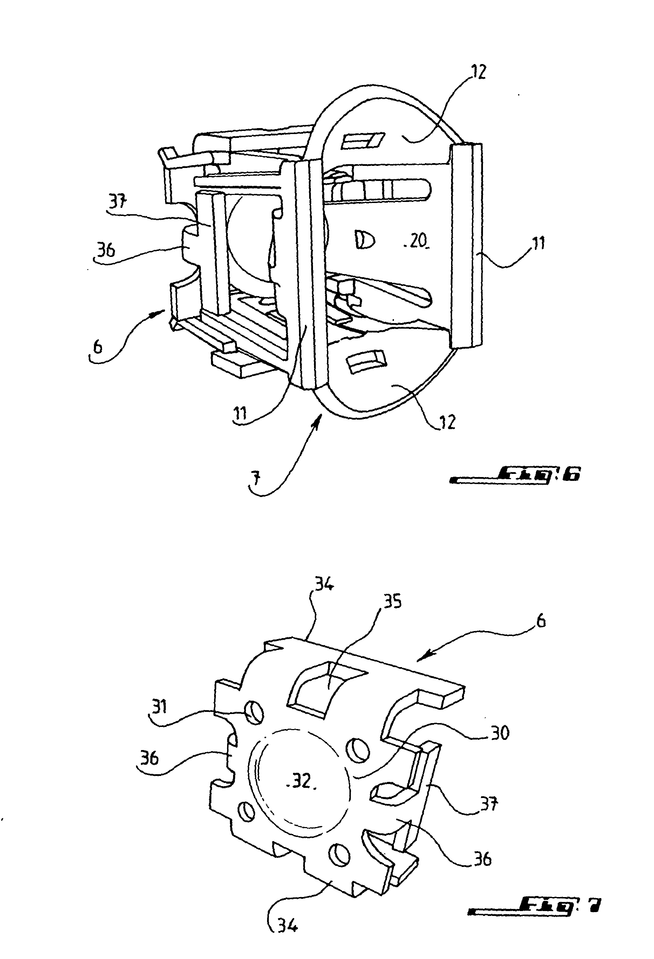

Comme on le voit notamment sur les figures 5 et 6, l'agrafe 7 présente la structure d'une cage de forme générale parallélépipédique, comportant du côté extérieur un cadre 11 pourvu sur deux côtés opposés de zones coniques 12 de centrage lors de l'insertion de la rotule 2 et duquel fait saillie, perpendiculairement, au niveau de chaque angle, un élément d'entretoise 14. Chaque entretoise porte, la prolongeant, un pion de centrage 16 dont la fonction sera décrite plus loin et une patte élastique 17. Une barrette transversale 18 parallèle à chaque bord du cadre 11, qui ne comporte pas un cône de centrage 12, relie les extrémités libres des deux entretoises 14 correspondantes.

Sur chaque côté à barrette 18, l'agrafe comporte une ailette 20 de verrouillage de la sphère 2, qui s'étend obliquement vers l'axe de l'agrafe à partir du cadre 11 et est élastiquement déplaçable de sa position rapprochée de l'axe de l'agrafe et de verrouillage dans laquelle elle vient en prise derrière la sphère, par cette dernière lors de son insertion dans l'agrafe, dans sa position écartée de passage de la rotule. L'extrémité de verrouillage de chaque ailette 20 est arquée de façon complémentaire à la forme sphérique de la sphère 2.

L'agrafe comporte sur chacun des deux autres côtés un clip 21 de maintien de l'agrafe sur la cage de rotule. Le clip comporte une languette 22 qui s'étend à partir du côté à cône de centrage 12 du cadre 11 et est munie à son extrémité libre d'un épaulement de crochet 23 qui fait saillie, perpendiculairement, vers l'extérieur. La languette 22 comporte en outre une patte de recentrage 24 qui s'étend à partir de l'extrémité à crochet 22 en direction du cadre 11. Les languettes 22 sont susceptibles d'être déviées élastiquement d'une position dans laquelle elles assurent la retenue de l'agrafe 7 dans la cage de rotule 6 de la manière qui sera décrite plus loin, dans une position permettant l'insertion de l'agrafe dans la cage. Il est à noter que, dans la position de retenue, la face inférieure 25 de l'extrémité à crochet 23 est en appui sur la face extérieure sphérique de la rotule, comme on le voit sur la figure 1. L'agrafe se trouve ainsi bloquée dans sa position de retenue.

Comme le montre la figure 4, le coussinet 9 est en forme d'une plaque rectangulaire qui comporte au niveau de chaque angle un trou 27 de passage d'un pion 16 de l'agrafe 6 et dont la partie centrale 28 est bombée vers l'extérieur et présente la forme d'une calotte sphérique de réception de la rotule 2 et est donc complémentaire à la forme de celle-ci.

Le coussinet est susceptible d'être pré-assemblé sur l'agrafe, conformément à la figure 4. Il suffit à cette fin d'enfiler le coussinet par ces trous 27 sur les pions 16 de l'agrafe.

En se reportant spécifiquement à la figure 7, on constate que la cage 6 de réception de l'agrafe 7 comporte une paroi de fond de forme générale rectangulaire 30, qui comporte au niveau de chaque angle un trou 31 de passage d'un pion 16 de l'agrafe et dont la partie médiane présente un creux approprié 32 de réception de la partie bombée 28 du coussinet et donc également en forme d'une calotte sphérique.

La cage comporte deux parois latérales opposées 34, perpendiculaires au fond 30, qui comprennent chacune une découpe 35 de réception d'un crochet 23 du clip 21 de l'agrafe. Sur ces deux autres côtés opposés, la cage comporte des pattes 36, chacune en forme d'un T dont le pied est solidaire du fond 30 et dont la branche transversale 37 constitue le bord supérieur de la paroi latérale. Le fond 30 de la cage 6 est bombé dans sa partie médiane pour former un logement en forme de calotte sphérique du coussinet.

On décrira ci-après le déroulement du montage de la rotule 2 de la tige de frein 1 sur la pédale de frein 3.

Dans une première phase, on fixe la cage 6 sur la pédale de frein 3, par exemple par soudage, rivetage ou vissage ou encore de toute autre manière connue. On pré-assemble le coussinet et l'agrafe 7, en enfilant le coussinet par ses trous 27 sur les pions 16 de l'agrafe, comme cela est représenté aux figures 4 et 5. Ensuite, dans une troisième étape, on monte l'ensemble pré-assemblé du coussinet et de l'agrafe sur la cage 6 en faisant passer les pions 16 à travers des trous 31 dans la paroi de fond 30 de la cage. Lors de l'insertion de l'agrafe, les crochets 23 à l'extrémité des languettes élastiques 22 de l'agrafe viennent en prise dans les découpes 35 de la cage, comme on le voit sur la figure 2. La dernière étape consiste à introduire la sphère 2 par le cadre 11 de l'agrafe 7. Lors de son mouvement de mise en place dans le creux du coussinet 9, la rotule fait dévier élastiquement vers l'extérieur les ailettes 20 qui, après le passage de la rotule, reviennent dans une position en prise derrière la rotule lorsque celle-ci repose dans le creux du coussinet. En s'opposant à tout effort d'arrachement de la rotule, les ailettes empêchent tout mouvement en arrière de celle-ci. Comme on le voit sur la figure 1, dans sa position montée, la rotule verrouille les crochets 23 des clips 21 de l'agrafe dans sa position montée sur la cage 6, dans la mesure où la surface périphérique de la sphère de la rotule empêche tout mouvement de dégagement des clips de leurs découpes 35 de réception prévues sur la cage.

Il ressort de la description de l'invention et des figures, que le montage de la rotule s'effectue aisément. En effet, dans la mesure où la rotule n'est pas encore insérée dans l'agrafe, cette dernière peut être montée sur la cage facilement puisque les deux clips peuvent fléchir et venir en prise dans leurs découpes dans la cage, facilement. Un effort d'assemblage faible est suffisant. Lors de son insertion, la sphère 2 est recentrée par les parties coniques 12 de l'agrafe et par les pattes de recentrage 24. Puis la rotule va déformer les deux ailettes 20 afin de se bloquer dans l'agrafe. Après sa mise en place sur son siège, c'est-à-dire le coussinet, la sphère est retenue par les ailettes dans sa position montée. Dans cette position, la sphère assure le blocage de l'agrafe dans la cage puisque les clips 21 ne peuvent pas fléchir dans la mesure où ils sont verrouillés par la sphère. Ne pouvant plus travailler en flexion, les clips ne sont sollicités mécaniquement qu'en cisaillement et traction. Cela assure une très grande tenue de l'agrafe dans la cage et par conséquent de la tige de freinage.

L'invention permet un démontage de la tige de frein en déformant les clips de maintien de la rotule grâce à une pince à clip. Afin de ne pas casser ces clips, suite à un déplacement trop important, le déplacement de ceux-ci est arrêté par les bords tombés du siège de rotule. Lors du démontage avec l'outil, la course des ailettes est limitée par les branches en forme de T des pattes de la cage.

## Revendications

1. Dispositif de montage notamment d'une tige de commande de frein (1) sur la pédale de frein d'un véhicule automobile, du type comprenant une sphère (2) à l'extrémité de la tige et une cage de rotule solidarisable de la pédale de frein, la sphère (2) étant montée sur la cage de rotule (6) par l'intermédiaire d'une agrafe (7) de réception et de verrouillage de la sphère, qui est pourvue de moyens de blocage (20) de l'agrafe (7) dans la cage (6) lorsque la sphère (2) est dans sa position verrouillée dans l'agrafe, **caractérisé en ce que** l'agrafe (7) présente une forme générale parallélépipédique et comporte sur deux côtés opposés des ailettes (20) élastiquement déformables de verrouillage de la sphère (2) dans l'agrafe (7) et, sur chacun des deux autres côtés, un clip (21) élastiquement déplaçable entre une position d'insertion de l'agrafe dans la cage (6) et une position de blocage dans la cage et **en ce que** la sphère (2), dans sa position montée dans la cage, retient les clips dans leur position de blocage en venant en appui contre une face (25) des clips (21) de blocage de l'agrafe dans la cage, les ailettes (20) de verrouillage étant élastiquement déformables, entre une position rapprochée de l'axe de l'agrafe (7) et de verrouillage de la sphère (2) après son insertion, d'une part et une position de passage de la rotule, d'autre part.

2. Dispositif de montage selon la revendication 1, **caractérisé en ce que** l'agrafe (7) comporte un cadre extérieur (11) de passage de la sphère (2) à partir duquel les ailettes de verrouillage (20) s'étendent obliquement de façon que les extrémités libres des ailettes sont élastiquement déplaçables de la position de verrouillage, dans laquelle elles sont rapprochées, et la position de passage dans laquelle elles sont écartées.

3. Dispositif de montage selon la revendication 1 ou 2, **caractérisé en ce que** les clips (21) sont formés par des languettes (22) solidaires à une extrémité à l'agrafe (7) et dont l'autre extrémité est configurée en crochet (23) de blocage de l'agrafe (7) dans la cage (6).

4. Dispositif de montage selon l'une quelconque des revendications 1 à 3, **caractérisé en ce qu'**il comprend un coussinet (8) de logement de la sphère (2) qui est susceptible d'être pré-assemblé sur l'agrafe, avant le montage de cette dernière dans la cage de rotule (6).

5. Dispositif de montage selon la revendication 4, **caractérisé en ce que** la cage (6) comporte des pions (16) de centrage du coussinet (8) sur l'agrafe (7) et de l'ensemble formé par l'agrafe et du coussinet sur la cage de rotule (6).

## Claims

1. A mounting device, in particular for a push rod of the power brake (1) to the brake pedal of a motor vehicle, of the type comprising a sphere (2) at the end of the rod and a ball joint cage which can be made integral with the brake pedal, the sphere (2) being mounted on the ball joint cage (6) via a fastener (7) for receiving and locking the sphere, which is provided with means (20) for blocking the fastener (7) in the cage (6) when the sphere (2) is in its locked position in the fastener, **characterized in that** the fastener (7) has a parallelepiped general shape and comprises, on two opposite sides, elastically deformable fins (20) for locking the sphere (2) in the fastener (7) and, on each of the other two sides, a clip (21) which is elastically movable between a position for inserting the fastener in the cage (6) and a position for blocking said fastener in the cage, and **in that** the sphere (2), in its position mounted in the cage, holds the clips in their blocking position by bearing against a face (25) of the clips (21) for blocking the fastener in the cage, the locking fins (20) being elastically deformable between a position closer to the axis of the fastener (7) and for locking of the sphere (2) after its insertion on one hand, and a position for passage of the ball joint on the other.

2. The mounting device according to claim 1, **characterized in that** the fastener (7) comprises an exterior frame (11) for passage of the sphere (2) from which the locking fins (20) extend obliquely such that the free ends of the fins are elastically movable from the locking position, in which they are close together, and the passage position in which they are separated.

3. The mounting device according to claim 1 or 2, **characterized in that** the clips (21) are formed by tabs (22) integral at one end with the fastener (7) and the other end of which is configured in a hook (23) for blocking the fastener (7) in the cage (6).

4. The mounting device according to any one of claims 1 to 3, **characterized in that** it comprises a bearing bush (8) for housing the sphere (2) which can be preassembled on the fastener, before mounting of the latter part in the ball joint cage (6).

5. The mounting device according to claim 4, **characterized in that** the cage (6) comprises slugs (16) for centering the bearing bush (8) on the fastener (7) and for the assembly formed by the fastener and the bearing bush on the ball joint cage (6).

## Patentansprüche

1. Vorrichtung zum Montieren insbesondere einer Bremsbetätigungsstange (1) am Bremspedal eines Kraftfahrzeuges, von der Art, die an dem Ende der Stange eine Kugel (2) und eine mit dem Bremspedal fest verbindbare Kugelgelenkschale umfasst, wobei die Kugel (2) an der Kugelgelenkschale (6) über eine Klammer (7) zum Aufnehmen und Verriegeln der Kugel angebracht wird, die mit Mitteln zum Blockieren (20) der Klammer (7) in der Schale (6) versehen ist, wenn die Kugel (2) sich in ihrer verriegelten Position in der Klammer befindet, **dadurch gekennzeichnet, dass** die Klammer (7) eine quaderförmige Gesamtform aufweist und auf zwei gegenüberliegenden Seiten elastisch verformbare Flügel (20) zum Verriegeln der Kugel (2) in der Klammer (7) und auf jeder der beiden anderen Seiten eine Klemme (21), die zwischen einer Position zum Einsetzen der Klammer in die Schale (6) und einer Position zum Blockieren in der Schale elastisch bewegbar ist, umfasst, und dass die Kugel (2) in ihrer in der Schale angebrachten Position die Klemmen in ihrer Blockierungsposition festhält, indem sie sich an einer Seite (25) der Klemmen (21) zum Blockieren der Klammer in der Schale abstützt, wobei die Verriegelungsflügel (20) zwischen einer der Achse der Klammer (7) und der Verriegelungsachse der Kugel (2) nach ihrem Einsetzen genäherten Position einerseits und einer Position zum Durchgang des Kugelgelenks andererseits elastisch verformbar sind.

2. Montagevorrichtung nach Anspruch 1, **dadurch gekennzeichnet, dass** die Klammer (7) einen Außenrahmen (11) zum Durchgang der Kugel (2) umfasst, von dem aus die Verriegelungsflügel (20) sich derart schräg erstrecken, dass die freien Enden der Flügel aus der Verriegelungsposition, in der sie angenähert sind, und der Durchgangsposition, in der sie ausgebreitet sind, elastisch bewegbar sind.

3. Montagevorrichtung nach Anspruch 1 oder 2, **dadurch gekennzeichnet, dass** die Klemmen (21) durch Zungen (22) gebildet werden, die an einem Ende der Klammer (7) fest verbunden sind, und deren anderes Ende als Haken (23) zum Blockieren der Klammer (7) in der Schale (6) konfiguriert ist.

4. Montagevorrichtung nach einem der Ansprüche 1 bis 3, **dadurch gekennzeichnet, dass** sie ein Lager (8) zum Lagern der Kugel (2) umfasst, das auf der Klammer vormontiert sein kann, bevor letztere in der Kugelgelenkschale (6) angebracht wird.

5. Montagevorrichtung nach Anspruch 4, **dadurch gekennzeichnet, dass** die Schale (6) Stifte (16) zum Zentrieren des Lagers (8) auf der Klammer (7) und der Anordnung, die aus der Klammer und dem Lager auf der Kugelgelenkschale (6) gebildet wird, umfasst.
